# EUROPÄISCHE PATENTSCHRIFT

(11) **EP 2 667 980 B1**
(45) Veröffentlichungstag und Bekanntmachung des Hinweises auf die Patenterteilung: **08.03.2017**
(21) Anmeldenummer: 12701058.5
(22) Anmeldetag: 11.01.2012
(51) Int. Cl.: B08B 5/02, B60S 3/00

(54) **VORRICHTUNG ZUM REINIGEN VON OBERFLÄCHEN VON GEGENSTÄNDEN**
DEVICE FOR CLEANING THE SURFACES OF OBJECTS
DISPOSITIF DE NETTOYAGE DE SURFACES D'OBJETS

(30) Priorität: 28.01.2011 DE 102011009626
(43) Veröffentlichungstag der Anmeldung: 04.12.2013
(73) Patentinhaber: Eisenmann SE, 71032 Böblingen (DE)
(72) Erfinder: SLUKA, Daniel, 70569 Stuttgart (DE); SCHÖNHARDT, Klaus, 71154 Nufringen (DE); ALBRECHT, Markus, 74232 Abstatt (DE)
(74) Vertreter: Heinrich, Hanjo
(86) Internationale Anmeldenummer: PCT/EP2012/000090
(87) Internationale Veröffentlichungsnummer: WO 2012/100907

(56) Entgegenhaltungen:
- EP-A1- 1 038 739
- DE-A1- 10 011 064
- DE-A1-102006 007 962
- US-A- 4 987 630
- US-A1- 2002 152 636

## Beschreibung

Die Erfindung betrifft eine Vorrichtung zum Reinigen von Oberflächen von Gegenständen, insbesondere von Fahrzeugkarosserien, gemäß dem Oberbegriff des Anspruchs 1.

Die US 2002/152636 beschreibt eine Vorrichtung, mit deren Hilfe statisch aufgeladene Partikel von der Oberfläche von Gegenständen entfernt werden können. Die DE 102006007962 offenbart eine Einrichtung zur Reinigung einer Fahrzeugkarosserie.

Derartige von Markt her bekannte Reinigungsvorrichtungen werden beispielsweise in der Automobilindustrie verwendet, um die Oberfläche von Fahrzeugkarosserien von Schmutzpartikeln zu befreien, bevor diese lackiert werden. Zu störenden Schmutzpartikeln zählen dabei insbesondere auf der Oberfläche verbleibende Flusen und Staubpartikel, die das Lackierergebnis beträchtlich verschlechtern würden. Insbesondere stören Partikel, deren Durchmesser in der Größenordnung von 50% der Dicke der aufzubringenden Beschichtung liegt. Als Reinigungsfluid wird in der Regel konditionierte Luft verwendet.

Die Schmutzpartikel auf der Oberfläche der Fahrzeugkarosserien haften unter anderem durch elektrostatische Kräfte. Durch die ionisierte Reinigungsluft werden diese Schmutzpartikel elektrisch neutralisiert und können so durch den Luftstrom von der Oberfläche der Fahrzeugkarosserie abgeblasen und von der Reinigungsluft aufgenommen werden. Diese nun mit Schmutzpartikeln beladene Luft wird dann mittels der Absaugeinrichtung als Abluft abgesaugt.

Um Ressourcen zu schonen, sollte die Menge der Reinigungsluft, d.h. der Betriebs-Volumenzustrom, mit dem die Reinigungsluft auf die zu reinigende Oberfläche abgegeben wird, so gering wie möglich gehalten werden. Es kann jedoch vorkommen, dass sich Schmutzinseln oder -nester auf der zu reinigenden Oberfläche gebildet haben, die bei einem Grund-Volumenzustrom der Reinigungsluft, der bereits zu einem grundsätzlich zufriedenstellenden Reinigungsergebnis führt, nicht von der Oberfläche entfernt werden.

In diesem Fall muss der Volumenzustrom der Reinigungsluft erhöht werden, damit die Reinigungsluft mit einer größeren Geschwindigkeit auf die abzureinigende Schmutzinsel auftrifft und diese von der Oberfläche löst. Diese Erhöhung des Volumenzustroms ist nur über einen kurzen Zeitraum erforderlich. Der Volumenzustrom der Reinigungsluft sollte jedoch im Hinblick auf die Schonung von Ressourcen schnell erhöht werden und ebenso schnell wieder auf den Ausgangswert zurückfallen können.

Üblicherweise wird die Reinigungsluft von einem Kompressor erzeugt. Ein Kompressor ist jedoch verhältnismäßig träge, so dass eine gewisse Zeit vergeht, bis der Volumenzustrom der Reinigungsluft auf den benötigten Wert angehoben und nach entfernen der Schmutzinsel wieder abgesenkt ist. Auf diese Weise wird insgesamt ein Anteil von Reinigungsfluid über einen bestimmten Zeitraum mit einem größeren Volumenzustrom auf die Fahrzeugkarosserie abgegeben, als es für eine effektive Reinigung bei normaler Verschmutzung erforderlich ist.

Es ist daher Aufgabe der Erfindung, eine Reinigungsvorrichtung der eingangs genannten Art zu schaffen, welche diesen Gedanken Rechnung trägt.

Diese Aufgabe wird bei einer Reinigungsvorrichtung der eingangs genannten Art dadurch gelöst, dass
c) die Blaseinrichtung Mittel umfasst, welche eingerichtet sind, den Betriebs-Volumenzustrom kurzfristig und nahezu schlagartig zu erhöhen und wieder abzusenken.

Unter kurzzeitig wird vorliegend ein Zeitraum von längstens 5 bis 10 Sekunden verstanden. Unter Umständen kann der Zeitraum jedoch auch länger sein. Sowohl die Erhöhung des Betriebs-Volumenzustroms als auch dessen Absenken auf den Ausgangswert muss dabei nahezu schlagartig erfolgen. Erfindungsgemäß wurde erkannt, dass es insbesondere mit Blick auf die Schonung von Ressourcen wertvoll ist, wenn die Erhöhung des Volumenzustroms tatsächlich nur über einen kurzen Zeitraum aktiviert werden kann, möglichst gerade so lange, bis eine Schmutzinseln bzw. ein Schmutznest entfernt ist.

Es ist dabei günstig, wenn die Blaseinrichtung wenigstens eine Primär-Blasdüse, durch welche Fluid mit einem Grund-Volumenzustrom abgebbar ist, und wenigstens eine wahlweise zuschaltbare Sekundär-Blasdüse umfasst. Durch eine separat betreibbare Sekundär-Blasdüse kann der Betriebs-Volumenzustrom nicht nur kurzzeitig, sondern auch nahezu schlagartig erhöht und wieder abgesenkt werden, wie es oben angesprochen ist. Hierdurch wird erneut auf einen sparsamen Umgang mit den vorhandenen Ressourcen geachtet.

Eine gute Basisreinigung ohne den zusätzlichen Betrieb der Sekundär-Blasdüse wird erreicht, wenn die Primär-Blasdüse als Diffusordüse ausgebildet ist. Durch eine Diffusordüse kann in an und für sich bekannter Weise ein verwirbelter Strom aus Reinigungsfluid erzeugt werden.

Um vorhandene Schmutzinseln oder -nester gezielt zu entfernen, ist es günstig, wenn die Sekundär-Blasdüse als Strahldüse ausgebildet ist, mit welcher ein gerichteter Fluidstrom erzeugbar ist.

Um das erhöhte Volumen von mit Schmutzpartikeln beladenem Fluid zuverlässig von der zu reinigenden Oberfläche abzuführen, ist es von Vorteil, wenn die Absaugeinrichtung eine primäre Absaugeinheit, durch welche mit Schmutzpartikeln beladenes Fluid mit einem Grund-Volumenabstrom absaugbar ist, und eine wahlweise zuschaltbare sekundäre Absaugeinheit umfasst. Letztere wird dabei vorzugsweise dann aktiviert, wenn auch die Sekundär-Blasdüse Reinigungsfluid abgibt.

Eine technisch günstige Lösung besteht hierbei darin, dass die sekundäre Absaugeinheit als Injektordüse ausgebildet ist.

Da die primäre Absaugeinheit mit einer konstanten Absaugleistung arbeitet, baut sich jedoch bei aktiver sekundärer Absaugeinheit kurzzeitig ein Überdruck im System auf. Daher ist vorzugsweise im Strömungsweg des abgesaugten Fluids vor der primären Absaugeinheit eine Überdruck-Kompensationseinrichtung vorhanden. Durch diese kann das überschüssige Volumen an Fluid entweder über einen bestimmten Zeitraum aufgenommen oder weitergeleitet werden.

Die Reinigungsleistung kann noch verbessert werden, wenn die Blaseinrichtung in einem Reinigungskopf untergebracht ist, dessen freies Ende ein vorzugsweise antistatisches Bürstenelement trägt.

Wenn das freie Ende des Reinigungskopfes als verschwenkbar gelagertes Endglied ausgebildet ist, können auch von einer ebenen Kontur abweichende Oberflächen effektiv gereinigt werden, da das verschwenkbare Endglied diesen Oberflächen gut folgen kann.

Eine besonders kompakte Bauweise wird erreicht, wenn ein Zufuhrkanal zur Blaseinrichtung und darüber zu einem Arbeitsraum führt, der seinerseits mit einem Ringkanal verbunden ist, der den Zufuhrkanal umgibt. Über den dann mittig verlaufenden Zuführkanal kann dann Reinigungsfluid zum Ort der Reinigung geleitet werden. Das mit Schmutzpartikeln beladene Fluid kann dann über den Ringkanal seitlich neben dem Zuführkanal abgesaugt werden. Der Arbeitsraum kann seitlich begrenzt sein oder nur den Bereich vor der Blaseinrichtung ohne strukturelle Grenzen definieren.

Nachfolgend wird ein Ausführungsbeispiel der Erfindung anhand der Zeichnungen näher erläutert. In diesen zeigen:
- Figur 1: schematisch eine Reinigungsanlage zur Reinigung der Oberfläche einer Fahrzeigkarosserie mit einem Roboterarm, welcher einen Reinigungskopf trägt;
- Figur 2: schematisch eine Darstellung des Reinigungskopfes in vergrößertem Maßstab;
- Figur 3: schematisch und nochmals in vergrößertem Maßstab den Bereich einer Überdruck-Kompensationseinrichtung des Reinigungskopfes.

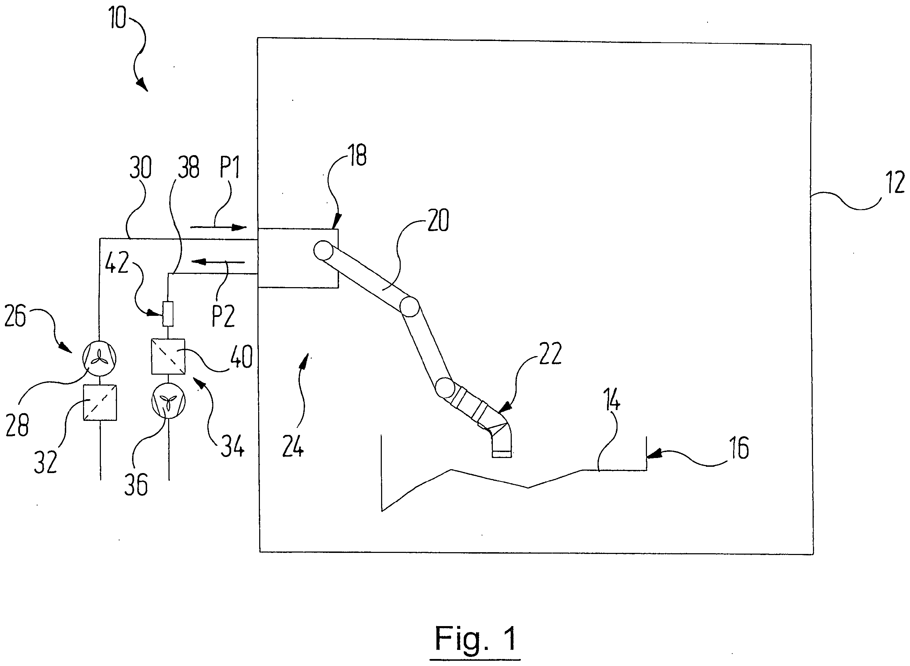

In Figur 1 ist mit 10 eine Reinigungsanlage bezeichnet, welche eine Behandlungskabine 12 umfasst, in der die Oberfläche 14 von Fahrzeugkarosserien 16 von Verunreinigungen in Form von Feststoffpartikeln wie Stäuben und Flusen und dergleichen gereinigt wird, bevor diese beschichtet und z.B. lackiert werden. Anstelle von Fahrzeugkarosserien 16 können auch andere Gegenstände vor einer Oberflächenbeschichtung in der Reinigungsanlage 10 gereinigt werden.

In der Behandlungskabine 12 ist ein mehrachsiger Roboter 18 mit einem Roboterarm 20 angeordnet, mit dessen Hilfe ein Reinigungskopf 22 einer insgesamt mit 24 bezeichneten Reinigungsvorrichtung entlang der und über die Oberfläche 14 der zu reinigenden Fahrzeugkarosserie 16 geführt werden kann.

Die Reinigungsvorrichtung 24 umfasst eine Kompressoreinheit 26, mittels welcher dem Reinigungskopf 22 durch ein Gebläse 28 über einen Versorgungsschlauch 30 Druckluft zugeführt werden kann. Diese Luftströmung bzw. deren Strömungsrichtung ist in den Figuren durch Pfeile P1 angedeutet. Stromauf des Gebläses 28 ist ein Filter 32 vorgesehen, durch welches die zum Reinigungskopf 22 gelangende Druckluft gereinigt wird.

Außerdem umfasst die Reinigungsvorrichtung 24 eine primäre Absaugeinheit 34 mit einem Gebläse 36, welches mit Verunreinigungen beladene Luft über eine Absaugleitung 38 wieder aus dem Reinigungskopf 22 absaugt, worauf weiter unten noch näher eingegangen wird. Die Strömung bzw. die Strömungsrichtung dieser Luft ist in den Figuren durch Pfeile P2 angedeutet. Auch dem Gebläse 36 ist stromauf ein Filter zugeordnet. Diese trägt das Bezugszeichen 40 und filtert die vom Reinigungskopf 22 kommende verunreinigte Luft.

In der Absaugleitung 38 ist zwischen dem Filter 40 und dem Reinigungskopf 22 eine Überdruckkompensationseinrichtung 42 angeordnet, auf welche ebenfalls weiter unten näher eingegangen wird.

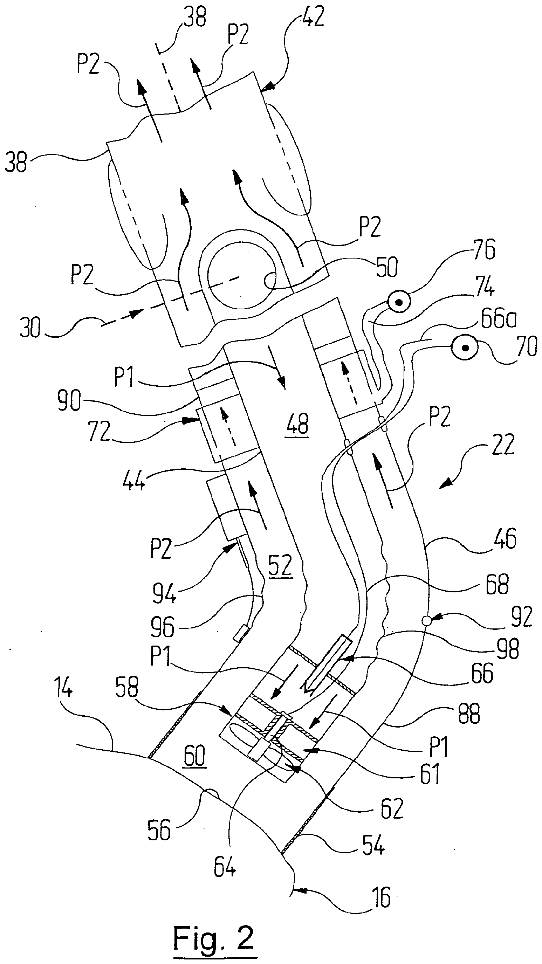

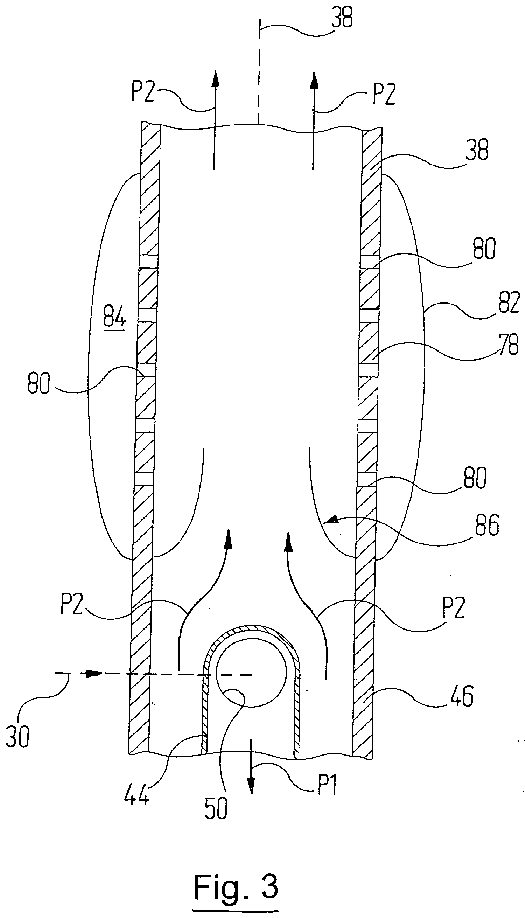

Wie in Figur 2 zu erkennen ist, umfasst der Reinigungskopf 22 einen röhrenförmigen Innenmantel 44 und einen diesen unter Einhaltung eines Abstandes umgebenden röhrenförmigen Außenmantel 46, der durch nicht eigens gezeigte Distanzglieder gewahrt wird. Der Innenmantel 44 begrenzt einen LuftZufuhrkanal 48, der über einen von außen zugänglichen Anschluss 50 mit dem in den Figuren 2 und 3 nur gestrichelt gezeigten Versorgungsschlauch 30 verbunden ist, wozu der Anschluss 50 in radialer Richtung durch den Außenmantel 46 hindurch ragt.

Zwischen dem Innenmantel 44 und dem Außenmantel 42 ist ein ringförmiger Absaugkanal 52 ausgebildet, der in Absaugrichtung P2 betrachtet hinter dem Anschluss 50 des Zufuhrkanals 48 in die Absaugleitung 38 übergeht, die dort den gleichen Querschnitt hat, wie der Außenmantel 46 und zur oben erwähnten Überdruckkompensationseinheit 42 führt.

An seinem freien Rand trägt der Außenmantel 46 des Reinigungskopfes 22 eine antistatische röhrenförmige Bürstenleiste 54, welche auf der Oberfläche 14 der zu reinigenden Fahrzeugkarosserie 16 in radialer Richtung einen Reinigungsbereich 56 definiert, der von dem Reinigungskopf 22 abgedeckt wird, wenn dieser nicht bewegt wird.

An seinem freien Ende mündet der Innenmantel 44 in eine Primär-Blasdüse, die beim vorliegenden Ausführungsbeispiel als Diffusordüse 58 ausgebildet ist. Diese ist gegenüber dem unteren Rand der Bürstenleiste 54, der im Betrieb der Reinigungsvorrichtung 24 die Oberfläche 14 der Fahrzeugkarosserie 16 berührt, nach Innen versetzt. Auf diese Weise ist ein Arbeitsraum 60 des Reinigungskopfes 22 ausgebildet, den die Bürstenleiste 54 seitlich begrenzt.

Mittels der Diffusordüse 58 kann die Luft in an und für sich bekannter Weise in einer pulsierenden Rotationsströmung aus dem Zufuhrkanal 48 in den Arbeitsraum 60 eintreten, wodurch Schmutzpartikel auf der Oberfläche 14 im Reinigungsbereich 56 aufgewirbelt werden. Die Diffusordüse 58 umfasst hierzu eine Diffusoreinheit 61 sowie einen stromab unmittelbar dahinter angeordneten Rotor 62, der auf einer Hohlwelle 64 gelagert ist. Die Kompressoreinheit 26 gibt dabei einen Grund -Volumenzustrom vor, mit dem die Reinigungsluft die Diffusordüse 58 verlässt.

In Strömungsrichtung P1 vor der Diffusordüse 58 ist im Zufuhrkanal 48 außerdem eine Ionisationseinheit 66 angeordnet, die über eine Hochspannungsleitung 66a mit Hochspannung beaufschlagt werden kann, die mit einer nicht eigens gezeigten Hochspannungsquelle verbunden ist. Mittels dieser Ionisationseinheit 66 wird die Luft in an und für sich bekannter Weise ionisiert, bevor sie über die Diffusordüse 58 in den Arbeitsraum 60 strömt. Wenn die üblicherweise geladenen Schmutzpartikel auf der Oberfläche 14 der Fahrzeugkarosserie 16 mit der ionisierten Luft in Kontakt kommen, werden die Schmutzpartikel wie eingangs erwähnt elektrisch neutralisiert, so dass sie sich durch den Luftstrom von der Oberfläche 14 lösen und von der Luft aufgenommen werden können, welche nun als mit Schmutzpartikeln beladene Abluft vorliegt.

Die Absaugeinheit 34 ist auf die Kompressoreinheit 26 abgestimmt und saugt die Abluft aus dem Arbeitsraum 60 mit einem Grund-Volumenabstrom ab, der dem durch die Kompressoreinheit 26 vorgegebenen Grund-Volumenzustrom entspricht. Die Größe des Grund-Volumenzustroms und des Grund-Volumenabstroms hängt dabei in der Regel von der Beschaffenheit der zu reinigenden Oberfläche 14 ab. Eine effektive Reinigung kann in manchen Fällen auch mit einem kleineren Volumenzustrom der Zuluft erzielt werden als mit einem demgegenüber größeren Volumenzustrom. In der Praxis hat es sich als wirksam und wirtschaftlich erwiesen, wenn der Volumenzustrom der Zuluft etwas über dem Mindestwert angesiedelt ist, der für ein zufriedenstellendes Reinigungsergebnis mindestens erforderlich ist. Der Grund-Volumenabstrom wird durch die Absaugeinheit 34 hierzu komplementär eingestellt.

Es kommt jedoch vor, dass sich auf der zu reinigenden Oberfläche 14 Schmutzinseln oder -nester gebildet haben, die mit der Zuluft bei dem voreingestellten Grund-Volumenzustrom nicht in ausreichendem Maße von der Oberfläche 14 entfernt werden können.

Um auch dies sicherzustellen, kann die Hohlwelle 64 an ihrem vom Arbeitsraum 60 abliegenden Ende über einen Versorgungsschlauch 68 separat mit Zusatz-Druckluft beaufschlagt werden, welche dann die Hohlwelle 64 durchströmt und an ihrem dem Arbeitsraum 60 zugewandten Ende verlässt. Hierzu steht der Versorgungsschlauch 68 mit einer von der Kompressoreinheit 26 unabhängigen und separat ansteuerbaren Druckluftquelle 70 in Verbindung.

Somit bildet die Hohlwelle 64 der Diffusordüse 58 eine davon getrennt arbeitende Strahldüse 64 als Sekundär-Blasdüse, welche einen lokal gerichteten Luftstrom auf die Oberfläche 14 der Fahrzeugkarosserie 16 leitet. Auf diese Weise kann der Betriebs-Volumenzustrom von Luft, die dem Arbeitsraum 60 zugeführt und auf die zu reinigenden Oberfläche 14 der Fahrzeugkarosserie 16 geleitet wird, kurzzeitig erhöht und wieder abgesenkt werden, indem die Strahldüse 64 aktiviert und wieder deaktiviert wird.

Dies erfolgt, indem ein nicht eigens gezeigtes und der Strahldüse 64 zugeordnetes Ventil entsprechend angesteuert wird und den Strömungsweg für die Druckluft freigibt oder blockiert. An diesem Ventil liegt ständig Druckluft aus der Druckluftquelle 70 an.

Bei deaktivierter Strahldüse 64 entspricht der Betriebs-Volumenzustrom des Reinigungskopfes 22 somit dem Grund-Volumenzustrom, der durch die Kompressoreinheit 26 vorgegeben ist. Wenn die Strahldüse 64 aktiviert ist, erhöht sich der Betriebs-Volumenzustrom der auf die Oberfläche 14 der Fahrzeugkarosserie 16 geleiteten Zuluft entsprechend um den Volumenzustrom, der durch die Strahldüse 64 erzeugt wird.

In einer Abwandlung kann auch zusätzlich zur oder anstelle der Hohlwelle 64 der Diffusordüse 58 als Strahldüse eine gesonderte Düsenanordnung mit einer oder mehreren Strahldüsen so in dem Reinigungskopf 22 angeordnet sein, dass in entsprechender Weise Zusatz-Druckluft in dessen Arbeitsraum 60 und in Richtung auf die Oberfläche 14 der Fahrzeigkarosserie 16 geleitet werden kann.

Durch diesen gerichteten Luftstrom aus der Strahldüse 64 können Schmutzinseln oder -nester auf der Oberfläche 14 der Fahrzeugkarosserie 16 gezielt aufgewirbelt werden, wodurch eine Art Boostfunktion zur Verfügung steht.

Somit bilden die Diffusordüse 58 und die Strahldüse 64 insgesamt eine Blaseinrichtung, mittels welcher ein Strom von durch die Ionisationseinrichtung 66 ionisierter Luft erzeugt werden kann.

Bei aktivierter Strahldüse 64 muss nun entsprechend mehr Abluft aus dem Arbeitsraum 60 abgesaugt werden als wenn der Reinigungskopfes 22 mit deaktivierter Strahldüse 64 normal betrieben wird.

Die Erhöhung des Betriebs-Volumenzustroms der Luft erfolgt sehr schnell und nahezu schlagartig, wenn die Strahldüse 64 aktiviert wird. Aus der Praxis hat sich ergeben, dass es unter normalen Umständen ausreicht, wenn die Erhöhung des Betriebs-Volumenzustroms kurzfristig erfolgt, um eine vorhandene Schmutzinsel zu entfernen. Unter kurzfristig wird vorliegend ein Zeitraum von längstens 5 bis 10 Sekunden verstanden.

Da die Absaugeinheit 34 zu träge reagiert und eine Erhöhung der Absaugleistung durch eine entsprechende Ansteuerung des Gebläses 36 der Absaugeinheit 34 zu lange dauern würde, um diesem kurzfristigen Anstieg des Betriebs-Volumenzustroms Rechnung tragen zu können, ist in den Ringkanal 52 als sekundäre Absaugeinheit eine Ring-Injektordüse 72 integriert, wie sie an und für sich bekannt ist. Die Ring-Injektordüse 72 arbeitet in Strömungsrichtung P2, was durch gestrichelte Pfeile angedeutet ist, und wird aus einer Schlauchleitung 74 mit dem benötigten Treibmedium in Form von Druckluft gespeist, die hierzu mit einer eigenen und separat ansteuerbaren Druckluftquelle 76 verbunden ist.

Die Ring-Injektordüse 72 ist derart auf die Strahldüse 64 abgestimmt und erhöht die Absaugleistung der Absaugeinheit 34 in der Weise, dass der resultierende Betriebs-Volumenabstrom, mit dem Abluft aus dem Arbeitsraum 60 abgesaugt wird, dem Betriebs-Volumenzustrom entspricht, mit dem der Arbeitsraum 60 sowohl über die Diffusordüse 58 als auch über die Strahldüse 64 mit Druckluft beaufschlagt wird.

Wenn die Strahldüse 64 eingesetzt wird, wird synchron auch die Ring-Injektordüse 72 aktiviert, so dass das größere Luftvolumen, das dem Arbeitsraum 60 zugeführt wird, effektiv aus dem Arbeitsraum 60 abgesaugt wird.

Bei deaktivierter Ring-Injektordüse 72 entspricht der Betriebs-Volumenabstrom des Reinigungskopfes 22 somit dem Grund-Volumenabstrom, der durch die Absaugeinheit 34 vorgegeben ist. Wenn die Ring-Injektordüse 72 aktiviert ist, erhöht sich der Betriebs-Volumenabstrom, mit dem Abluft aus dem Arbeitsraum 60 abgesaugt wird, entsprechend um den Volumenabstrom, der durch die Ring-Injektordüse 72 erzeugt wird.

Durch die Ring-Injektordüse 72 gelangt nun jedoch Luft mit einem größeren Volumenstrom in den Bereich der Absaugleitung 38 zwischen der Ring-Injektordüse 72 und der Absaugeinheit 34, als die Absaugeinheit 34 absaugen kann und es baut sich in diesem Bereich ein Überdruck auf. Aus diesem Grund ist die Überdruck-Kompensationseinrichtung 42 vorgesehen, die in Figur 3 in größerem Maßstab gezeigt ist.

Wie dort zu sehen ist, ist diese durch einen Abschnitt 78 der Absaugleitung 38 gebildet, in welchen radiale Durchgänge 80 vorhanden sind, von denen in Figur 3 nur einige mit einem Bezugszeichen versehen sind. Der Abschnitt 78 der Absaugleitung 38 ist gasdicht von einer dehnbaren Membranhülle 82 umgeben. Wenn nun der Druck in dem Bereich zwischen der Ring-Injektordüse 72 und der Absaugeinheit 34 ansteigt, kann Luft über die Durchgänge 80 in den Speicherraum 84 zwischen der Membranhülle 82 und der Absaugleitung 38 strömen, wobei sich die Membranhülle 82 bis zu einem gewissen Grad aufweiten kann.

Wenn dann die Strahldüse 64 wieder deaktiviert wird, wird die Luft durch die Membranhülle 82 wieder aus dem Speicherraum 84 in die Absaugleitung 38 gedrückt und von dort durch die Absaugeinheit 34 abgesaugt.

Mittels eines Rückschlagventils 86, welches in den Figuren 2 und 3 als einfaches Membranventil angedeutet ist, wird dabei verhindert, dass die aus dem Speicherraum 84 kommende Abluft wieder über Ringkanal 52 in Richtung auf die zu reinigende Oberfläche 14 der Fahrzeugkarosserie 16 zurückströmt.

Somit bilden die Absaugeinheit 34 und die Ring-Injektordüse 72 eine Absaugeinrichtung, mittels welcher mit Schmutzpartikeln beladene Luft von der zu reinigenden Oberfläche 14 der Fahrzeugkarosserie 16 mit einem Betriebs-Volumenabstrom abgesaugt werden kann.

Sofern die Arbeitsumgebung der Reinigungsvorrichtung 24 es zulässt, kann die überschüssige Abluft bei einer Abwandlung auch einfach über eine Abluftklappe an die Umgebung abgegeben werden, wobei gegebenenfalls noch ein Filter vorgesehen sein kann.

Damit der Reinigungskopf 22 der Oberflächenkontur einer zu reinigenden Fahrzeugkarosserie 16 besser folgen kann, sind der Innenmantel 44 und der Außenmantel 46 gelenkig ausgebildet. Hierzu ist der Außenmantel 46 in ein Endglied 88, welches die Bürstenleiste 54 trägt, und ein Führungsglied 90 unterteilt, welche über ein Schwenkgelenk 92 gegeneinander verschwenkbar gekoppelt sind. Beispielsweise ist das Führungsglied 90 mit dem freien Ende des Roboterarms 20 gekoppelt, so dass der Reinigungskopf 22 von diesem mitgeführt wird.

Um eine Schwenkbewegung des Endgliedes 88 gegenüber dem Führungsglied 90 durchführen zu können, trägt letzteres eine auf das Endglied 88 wirkende Verstelleinheit 94, wie sie an und für sich bekannt und in Figur 2 nur schematisch gezeigt ist. Das Endglied 88 und das Führungsglied 90 sind neben dem Schwenkgelenk 92 über einen flexiblen Verbindungsabschnitt 96 miteinander gekoppelt. In einem radial neben dem Schwenkgelenk 92 liegenden Ringabschnitt 98 ist auch der Innenmantel 44 des Reinigungskopfes 22 flexibel ausgebildet, so dass der Innenmantel 44 der Bewegung des Außenmantels 46 folgen kann.

Durch diese Beweglichkeit des Reinigungskopfes 22 kann zudem der Abrieb der vorhandenen Versorgungsschläuche 30, 68 und 74 und der Hochspannungsleitung 66a verringert werden, die verhältnismäßig dicht am Roboterarm 20 fixiert sind und in an und für sich bekannter Weise über eine Schleppleitung geführt werden. Ein Abrieb kann bei der notwendigen Bewegung des Roboterarmes 20 entstehen. Falls die Versorgungsschläuche 30, 68, 74 und die Hochspannungsleitung 66a bei einer entsprechenden Stellung des Roboterarm 20 unter Spannung geraten, können sie entlastet werden, indem das Endglied 86 mit der Bürstenleiste 54 in eine entsprechende Richtung verschwenkt wird. Dabei sind die Bewegung des Roboterarms 20 und das Verschwenken des Endgliedes 86 des Reinigungskopfes 22 natürlich so gesteuert, dass die Bürstenleiste 54 stets ringsum auf der Oberfläche 14 der Fahrzeugkarosserie 16 aufliegt.

Unter Umständen kann das Endglied 88 auch starr und unbeweglich mit dem Führungsglied 90 verbunden sein, wobei sich in der Praxis ein Winkel zwischen diesen Gliedern 88, 90 von 60° etabliert hat.

Bei einer nicht eigens gezeigt Abwandlung kann anstelle der Diffusoreinheit 61 und des Rotors 62 auch eine druckluftbetriebene Rotationsdüse verwendet werden, wie sie an und für sich bekannt ist. Eine solche Rotationsdüse kann unmittelbar aus dem Druckluftschlauch 68 gespeist werden. In diesem Fall kann z.B. auf die Strahldüse 64 verzichtet werden, da über eine derartige Rotationsdüse der Zufuhr-Volumenstrom direkt und unmittelbar erhöht werden kann. Die Kompensationsmaßnahmen in Form der Ring-Injektordüse 72 und der Überdruckkompensationseinheit 42 werden jedoch benötigt und sinngemäß entsprechend wie oben beschrieben betrieben. In diesem Fall wird eine Primär-Blasdüse und eine Sekundär-Blasdüse durch ein und dasselbe Bauteil gebildet. Ein solches Konzept einer Art Kombinationsdüse kann auch auf andere Weise als durch die angesprochene Rotationsdüse verwirklicht werden.

Bei einer weiteren nicht eigens gezeigten Abwandlung ist die Bürstenleiste 54 motorisch um ihre Mittelachse verdrehbar gelagert und rotiert während des Reinigungsvorganges. Hierdurch kommt es ergänzend zu einem mechanischen Abrieb von Schmutzpartikeln von der Oberfläche 14 der Fahrzeugkarosserie 16.

Der Roboterarm 20 kann bei einer weiteren Abwandlung mehrere Reinigungsköpfe 22 gemeinsam tragen, welche alle individuell angesteuert und betrieben werden können. Insbesondere durch die Verschwenkbarkeit der jeweiligen Endglieder 88 kann ein solches Array aus Reinigungsköpfen 22 gut einer konkaven oder konvexen Oberflächenkontur folgen.

Bei der oben beschrieben Reinigungsvorrichtung 24 wird Luft als Reinigungsfluid verwendet. Alternativ können auch andere Gase verwendet werden, sofern dies auf Grund der der zu reinigenden Oberfläche und der Beschaffenheit der Verunreinigungen angebracht ist.

## Patentansprüche

1. Vorrichtung zum Reinigen von Oberflächen von Gegenständen, insbesondere von Fahrzeugkarosserien, mit
a) einer Blaseinrichtung (58, 64) und einer Ionisationseinrichtung (66), wobei mittels der Blaseinrichtung (58, 64) ein Strom eines durch die Ionisationseinrichtung (66) ionisierten gasförmigen Fluids erzeugbar und mit einem Betriebs-Volumenzustrom auf eine zu reinigende Oberfläche (14) des Gegenstands (16) leitbar ist, wo Schmutzpartikel von dem Fluid aufgenommen werden;
b) einer Absaugeinrichtung (34, 72), mittels welcher mit Schmutzpartikeln beladenes Fluid von der zu reinigenden Oberfläche (14) des Gegenstandes (16) mit einem Betriebs-Volumenabstrom absaugbar ist,
wobei
c) die Blaseinrichtung (58, 64) Mittel (64, 70) umfasst, welche eingerichtet sind, den Betriebs-Volumenzustrom kurzfristig und nahezu schlagartig zu erhöhen und wieder abzusenken.

2. Vorrichtung nach Anspruch 1, **dadurch gekennzeichnet, dass** die Blaseinrichtung (58, 64) wenigstens eine Primär-Blasdüse (58), durch welche Fluid mit einem Grund-Volumenzustrom abgebbar ist, und wenigstens eine wahlweise zuschaltbare Sekundär-Blasdüse (64) umfasst.

3. Vorrichtung nach Anspruch 2, **dadurch gekennzeichnet, dass**, die Primär-Blasdüse (58) als Diffusordüse ausgebildet ist.

4. Vorrichtung nach Anspruch 2 oder 3, **dadurch gekennzeichnet, dass** die Sekundär-Blasdüse (64) als Strahldüse ausgebildet ist, mit welcher ein gerichteter Fluidstrom erzeugbar ist.

5. Vorrichtung nach einem der Ansprüche 1 bis 4, **dadurch gekennzeichnet, dass** die Absaugeinrichtung (34, 72) eine primäre Absaugeinheit (34), durch welche mit Schmutzpartikeln beladenes Fluid mit einem Grund-Volumenabstrom absaugbar ist, und eine wahlweise zuschaltbare sekundäre Absaugeinheit (72) umfasst.

6. Vorrichtung nach Anspruch 5, **dadurch gekennzeichnet, dass** die sekundäre Absaugeinheit (72) als Injektordüse ausgebildet ist.

7. Vorrichtung nach Anspruch 5 oder 6, **dadurch gekennzeichnet, dass** im Strömungsweg (38) des abgesaugten Fluids vor der primären Absaugeinheit (34) eine Überdruck-Kompensationseinrichtung (42) vorhanden ist.

8. Vorrichtung nach einem der Ansprüche 1 bis 7, **dadurch gekennzeichnet, dass** die Blaseinrichtung (58, 64) in einem Reinigungskopf (22) untergebracht ist, dessen freies Ende (88) ein Bürstenelement (54) trägt.

9. Vorrichtung nach Anspruch 8, **dadurch gekennzeichnet, dass** das freie Ende (88) des Reinigungskopfes als verschwenkbar gelagertes Endglied ausgebildet ist.

10. Vorrichtung nach einem der Ansprüche 1 bis 9, **dadurch gekennzeichnet, dass** ein Zufuhrkanal (48) zur Blaseinrichtung (58, 64) und darüber zu einem Arbeitsraum (60) führt, der seinerseits mit einem Ringkanal (52) verbunden ist, der den Zufuhrkanal (48) umgibt.

## Claims

1. Device for cleaning surfaces of objects, in particular of vehicle bodies, having
a) a blowing device (58, 64) and an ionizing device (66), wherein the blowing device (58, 64) can be used to generate a flow of a gaseous fluid that is ionized by the ionizing device (66) and to direct this flow, with an operating volumetric inflow, onto a surface (14), of the object (16), which is to be cleaned and where dirt particles are taken up by the fluid;
b) a suction device (34, 72) by means of which fluid loaded with dirt particles can be suctioned, with an operating volumetric outflow, from the surface (14), of the object (16), which is to be cleaned,
wherein
c) the blowing device (58, 64) comprises means (64, 70) which are set up to raise and again lower the operating volumetric inflow at short notice and almost instantaneously.

2. Device according to Claim 1, **characterized in that** the blowing device (58, 64) comprises at least one primary blowing nozzle (58), by means of which fluid can be discharged with a basic volumetric inflow, and at least one secondary blowing nozzle (64) that can be switched on as desired.

3. Device according to Claim 2, **characterized in that** the primary blowing nozzle (58) is designed as a diffuser nozzle.

4. Device according to Claim 2 or 3, **characterized in that** the secondary blowing nozzle (64) is designed as a jet nozzle which can generate an oriented fluid flow.

5. Device according to one of Claims 1 to 4, **characterized in that** the suction device (34, 72) comprises a primary suction unit (34), by means of which fluid loaded with dirt particles can be suctioned with a basic volumetric outflow, and a secondary suction unit (72) that can be switched on as desired.

6. Device according to Claim 5, **characterized in that** the secondary suction unit (72) is designed as an injector nozzle.

7. Device according to Claim 5 or 6, **characterized in that** an overpressure compensation device (42) is provided in the flow path (38) of the suctioned fluid, upstream of the primary suction unit (34).

8. Device according to one of Claims 1 to 7, **characterized in that** the blowing device (58, 64) is integrated into a cleaning head (22) whose free end (88) bears a brush element (54).

9. Device according to Claim 8, **characterized in that** the free end (88) of the cleaning head is designed as an end member that is mounted in a pivotable manner.

10. Device according to one of Claims 1 to 9, **characterized in that** a supply duct (48) leads to the blowing device (58, 64) and beyond to a working space (60) which is in turn connected to an annular duct (52) that surrounds the supply duct (48).

## Revendications

1. Dispositif dévolu au nettoyage de surfaces d'objets, notamment de carrosseries de véhicules, comprenant
a) un système d'insufflation (58, 64) et un système d'ionisation (66), sachant que, au moyen dudit système d'insufflation (58, 64), un courant de fluide gazeux, ionisé par ledit système d'ionisation (66), peut être engendré et peut être dirigé, avec un débit volumique d'afflux en service, vers une surface (14) de l'objet (16) qui doit être nettoyée et sur laquelle des particules de crasse sont absorbées par ledit fluide ;
b) un système (34, 72) d'élimination par aspiration, au moyen duquel du fluide chargé en particules de crasse peut être éliminé par aspiration, avec un débit volumique d'évacuation en service, à partir de ladite surface (14) de l'objet (16) devant être nettoyée,
sachant que
c) le système d'insufflation (58, 64) inclut des moyens (64, 70) conçus pour accroître, puis faire de nouveau chuter le débit volumique d'afflux en service, durant une courte période et de manière quasiment brusque.

2. Dispositif selon la revendication 1, **caractérisé par le fait que** le système d'insufflation (58, 64) comprend au moins une buse soufflante primaire (58) par l'intermédiaire de laquelle du fluide peut être délivré avec un débit volumique d'afflux fondamental, et au moins une buse soufflante secondaire (64) pouvant être mise sélectivement en circuit.

3. Dispositif selon la revendication 2, **caractérisé par le fait que** la buse soufflante primaire (58) est réalisée sous la forme d'une buse de diffusion.

4. Dispositif selon la revendication 2 ou 3, **caractérisé par le fait que** la buse soufflante secondaire (64) est réalisée sous la forme d'une buse de projection permettant d'engendrer un courant de fluide canalisé.

5. Dispositif selon l'une des revendications 1 à 4, **caractérisé par le fait que** le système (34, 72) d'élimination par aspiration comprend une unité primaire (34) d'élimination par aspiration au moyen de laquelle du fluide, chargé en particules de crasse, peut être éliminé par aspiration avec un débit volumique d'évacuation fondamental, et une unité secondaire (72) d'élimination par aspiration qui peut être mise sélectivement en circuit.

6. Dispositif selon la revendication 5, **caractérisé par le fait que** l'unité secondaire (72) d'élimination par aspiration est réalisée sous la forme d'une buse d'injection.

7. Dispositif selon la revendication 5 ou 6, **caractérisé par** la présence d'un système (42) compensateur de surpression, sur le trajet (38) d'écoulement du fluide éliminé par aspiration, en amont de l'unité primaire (34) d'élimination par aspiration.

8. Dispositif selon l'une des revendications 1 à 7, **caractérisé par le fait que** le système d'insufflation (58, 64) est intégré dans une tête de nettoyage (22) dont l'extrémité libre (88) porte un élément (54) à brosse.

9. Dispositif selon la revendication 8, **caractérisé par le fait que** l'extrémité libre (88) de la tête de nettoyage est réalisée sous la forme d'une pièce d'extrémité à montage pivotant.

10. Dispositif selon l'une des revendications 1 à 9, **caractérisé par le fait qu'**un canal d'arrivée (48) mène au système d'insufflation (58, 64) et, par l'intermédiaire de ce dernier, à une chambre de travail (60) raccordée, à son tour, à un canal annulaire (52) entourant ledit canal d'arrivée (48).
